# EUROPEAN PATENT SPECIFICATION

(11) **EP 4 376 240 B1**
(45) Date of publication and mention of the grant of the patent: **21.10.2026**
(21) Application number: 22209096.1
(22) Date of filing: 23.11.2022
(51) Int. Cl.: H02H 1/00, H02H 3/02, H02H 9/04

(54) **DRIVE SYSTEM WITH PROTECTION CAPABILITY**
ANTRIEBSSYSTEM MIT SCHUTZMÖGLICHKEIT
SYSTÈME D'ENTRAÎNEMENT AVEC CAPACITÉ DE PROTECTION

(43) Date of publication of application: 29.05.2024
(73) Proprietor: ABB SCHWEIZ AG, 5400 Baden (CH)
(72) Inventor: SCHAEFFER, David, Västerås (SE); HUJU, Kalle, Kirkkonummi (FI); SIEVERS, Manfred, Kouvola (FI); LINDELL, Elisabeth, Västerås (SE); POYHONEN, Simo, Helsinki (FI); MAGNUSSON, Jesper, Åkersberga (SE); BECERRA, Marley, Västerås (SE)
(74) Representative: Kransell & Wennborg KB

(56) References cited:
- EP-A1- 3 621 189
- JP-A- 2010 226 891
- US-A1- 2015 222 207

## Description

### TECHNICAL FIELD

The present disclosure generally relates to drive systems.

### BACKGROUND

A drive is a system comprising power converters, typically inverters, and a control system that controls the inverters. Drive systems can for example be used to control a plurality of electric motors in an industrial setting such as in pulp and paper manufacturing or in metal manufacturing, or in a marine vessel.

In more detail, a drive system generally comprises a bus to which the power converters are connected in parallel. In case of an internal arc fault on the bus, the capacitor banks of the power converters are due to their parallel connection quickly discharged to the arc. Since typically there are many power converters in a drive system, for example in the order of 50, capacitor discharging causes massive destruction of the installation. Today, the cabinets in which the power converters are housed are built to sustain a pressure increase resulting from the internal arc. The cabinets are thus over dimensioned to withstand the explosion. In the event that an internal arc fault occurs, it may in some cases take months to repair or replace the damaged equipment.

Drive systems usually comprise an internal protection system in the form of fuses between the bus and the power converters. The fuses do however typically not trip in case of an internal arc because the current through the fuses, which in each case is from the capacitor bank of a single power converter only, is not large enough. <insert page 1a>

### SUMMARY

In view of the above an object of the present invention is to provide a drive system which solves or at least mitigates the problems of the prior art.

EP 3 621 189 A1 discloses an assembly comprising at least two circuit arrangements, wherein each of the at least two circuit arrangements comprises a capacitor having a first and a second terminal and an electrically switching element, wherein the switching element is electrically connected between the first and second terminals of the capacitor and adapted to be externally activated to short-circuit the capacitor and dissipate energy stored in the capacitor. The second terminals of the capacitors of the at least two circuit arrangements are electrically connected and form a second electric connecting terminal of the assembly of the at least two circuit arrangements and wherein for each of the at least two circuit arrangements, a first side of an impedance with a magnitude of a complex resistance greater zero is electrically connected with the first terminal of the capacitor of the at least two circuit arrangements. Second sides of said impedances of the at least two circuit arrangements are electrically connected, to form a first electrical connecting terminal of the assembly of at least two circuit arrangements.

JP 2010 226891 A1 discloses a power-saving driving device and a method for an identical load pattern apparatus which consider the loss characteristics of all components to minimize an amount of loss without obtaining loss characteristics data by conducting preliminary tests on wiring electric characteristics, the presence/absence of an electromagnetic noise eliminating element, the loss characteristics of each motor, a temperature change, etc.

US2015222207A1 discloses a drive control device for a drive system (vertical carrier machine) having an AC/DC converter generating a DC output line (DC bus) with smoothing circuitry and inverter(s) supplying motor(s). Further, it discloses handling regenerative operation by dissipating excess energy in a braking resistor circuit and/or storing regenerative energy in a capacitor connected between the positive and negative DC output terminals via an inrush current suppression circuit.

The appended independent claim 1 defines a drive system comprising: a DC bus, a plurality of power electronics devices, each comprising a capacitor, each power electronics device being connected to the first busbar and to the second busbar in parallel with the other power electronics devices, and a plurality of arc suppressing devices, each being configured to short circuit the DC bus in case of an arcing fault on the DC bus.

By short-circuiting the DC bus with the arc supressing devices, the current is commutated from the arc into the arc supressing devices. The arc can thus be extinguished, and the risk of pressure build-up and catastrophic destruction can be eliminated or at least reduced. By using several arc supressing devices, their dimensioning can be made smaller because each will handle only a portion of the total current discharged from the capacitor banks of the power electronics devices.

Further, by the provision of multiple arc suppressing devices distributed in the drive system, short circuiting the arcing fault can be done closer to the arcing fault, which means that the arc can be extinguished with a low impedance path. The arc can thus be extinguished faster.

The inventors have found that using too many arc suppressing devices, in addition to increasing the cost, may result in that the discharge current is much higher than the discharge from the arc alone, leading to a potentially more destructive scenario. On the other hand, too few arc suppressing devices lead to issues such as too high impedance between the arc and an arc suppressing device, resulting in that the current does not commute into any arc suppressing device. What is to be understood as "few" depends on the size of the drive system, both in terms of the number of inverters and the length of the DC bus.

The DC bus may comprise a first busbar and a second busbar to which the power electronics devices are connected. Each busbar may comprise a single busbar or a plurality of parallel-connected sub-busbars for example with different voltage levels.

The arc suppressing devices may comprise a crowbar circuit connected across the first busbar and the second busbar, or across corresponding sub-busbars.

The drive system may for example be a low voltage or a medium voltage drive system.

According to one embodiment each arc suppressing device is assigned to at least one power electronics device. Each arc suppressing device is thus triggered based on local measurements in the proximity of the at least one power electronics device to trigger short-circuiting of the DC bus in case of an arcing fault on the DC bus.

According to one embodiment each arc supressing device is assigned to at least three power electronics devices of the plurality of power electronics devices, such as at least six, power electronics devices.

The arc suppressing devices may be distributed homogeneously, with for example one arc suppressing device assigned to K power electronics devices, where K is an integer. K may for example be 3, 6, or 9.

In some examples, the distribution of the arc suppressing devices may be non-homogeneous. For example, one arc suppressing device may be assigned to K power electronics devices, and one or more arc suppressing devices may be assigned to 2*K power electronics devices.

According to one embodiment the power electronics devices are consecutively connected to the DC bus.

One embodiment comprises a plurality of cabinets, wherein each cabinet comprises at least one power electronics device, preferably a plurality of power electronics devices arranged physically adjacent to each other.

According to one embodiment each arc supressing device comprises a semiconducting switch.

According to one embodiment the semiconducting switch is a thyristor or a transistor.

The arc suppressing devices may according to one example be one-shot devices that are destroyed after bypassing the arc fault.

According to one embodiment a total number of power electronics devices amount to at least 10, such as at least 15, such as at least 20. The more power electronics devices, the more capacitor banks, and thus the potential of a higher total current and/or a longer current impulse to the arc discharged from the capacitors. Utilising the arc suppressing devices disclosed herein is even more advantageous as the number of power electronics devices in the drive system increases, i.e., if the chain of power electronics devices or the length of the drive system is long. In general, the more power electronics devices the drive system comprises, the more arc suppressing devices it comprises.

According to one embodiment the arc suppressing devices are configured to short circuit the DC bus based on a DC bus current, a DC bus voltage, light, or pressure. Control of the arc suppressing devices may be based on a measured drive system parameter such as the DC bus current, the DC bus voltage, light, or pressure, measured by a sensor. Light and/or pressure may be inside a cabinet in which inverters are arranged.

According to one embodiment each power electronics device comprises one of an inverter, a DC/DC chopper, and a braker chopper.

One embodiment comprises a plurality of motors, wherein at least some of the power electronics devices are connected to a respective motor of the plurality of motors.

According to one example a plurality of power electronics devices may be connected to the same motor of the plurality of motors. For example, N power electronics devices may be connected to a first motor, where N is an integer greater than 1.

According to one embodiment all the arc suppressing devices are configured to short circuit the DC bus essentially simultaneously in case of an arcing fault on the DC bus.

With "essentially simultaneously" is meant that the time difference between short circuiting of the DC bus by adjacent arc suppressing devices is less than 150 µs, such as less than 100 µs.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1A schematically shows one example of a drive system;
Fig. 1B schematically shows the drive system in Fig. 1 when an arcing fault occurs on the DC bus; and
Fig. 2 schematically shows another example of a drive system.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

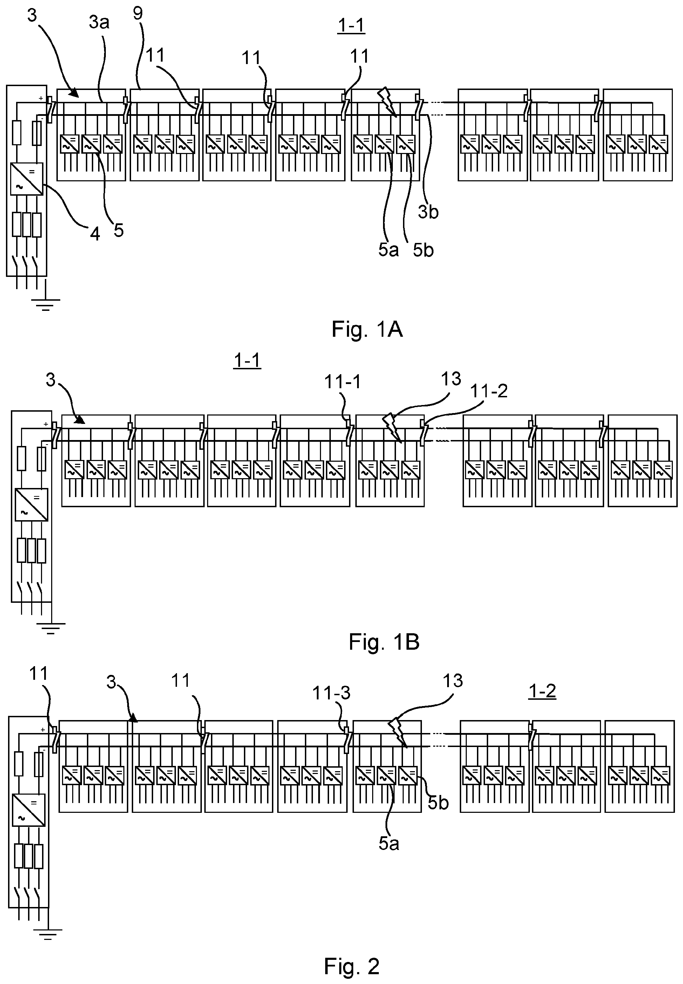

Fig. 1A depicts a circuit diagram of one example of a drive system 1-1.

The drive system 1-1 comprises a DC bus 3. According to the example the DC bus 3 comprises a first busbar 3a and a second busbar 3b.

The DC bus 3 is connected to a rectifier 4. The rectifier 4 may be connected to an AC power network, such as a three-phase power network.

The drive system 1-1 comprises a plurality of power electronics devices 5. The power electronics devices 5 will in the following be exemplified by inverters, and will thus be referred to as inverters 5. The inverters 5 are connected to the DC bus 3. Each inverter 5 is connected to the first busbar 3a and to the second busbar 3b. Each inverter 5 has a DC side and an AC side, and the DC side is connected to the DC bus 3. The AC side is configured to be, or is, connected to an AC load such as an electric motor.

The inverters 5 are connected to the DC bus 3 in parallel with each other.

The drive system 1-1 comprises a plurality of cabinets 9. Each cabinet 9 comprises one or more inverters 5 arranged inside the cabinet 9.

The cabinets 9 are, when the drive system 1-1 has been installed, typically arranged in a chain, one after the other. The physical length of the DC bus 3 thus normally depends on the number of cabinets 9.

The drive system 1-1 may comprise a plurality of control systems (not shown), each configured to control the one or more inverters 5. Each control system may comprise one or more controllers configured to control a respective inverter 5.

The drive system 1-1- comprises a plurality of arc suppressing devices 11. The arc suppressing devices 11 may be connected across the first busbar 3a and the second busbar 3b. Each arc suppressing device 11 is configured to short circuit the DC bus 3 by short-circuiting the first busbar 3a and the second busbar 3b. The arc suppressing devices 11 are configured to short-circuit the DC bus 3 in response to an arcing fault on the DC bus 3.

The arc suppressing devises 11 have a lower voltage drop over the first busbar 3a and the second busbar 3b than the arc voltage of an electric arc on the DC bus 3.

Each arc suppressing device 11 may comprise one or more semiconducting switches. The semiconducting switch may have a first leg connected to the first busbar 3a and a second leg connected to the second busbar 3b. In case of a plurality of semiconducting switches, the semiconducting switches may be connected in series across the first busbar 3a and the second busbar 3b.

By turning the semiconducting switch or switches to an on-state, the first busbar 3a and the second busbar 3b are connected via the semiconducting switch or switches, which are thus short-circuited.

The semiconducting switch may for example be a thyristor or a transistor such as an insulated gate bipolar transistor (IGBT) or an insulated gatecommutated transistor (IGCT).

Each arc suppressing device 11 is assigned to K inverters 5, where K may be an integer equal to or greater than 1. K may for example be 3, 4, 5, 6, 7, 8, or 9. According to the example in Fig. 1A, each arc supressing device 11 is assigned to three inverters 5. Thus, in this example, K=3.

The arc suppressing devices 11 may be arranged between adjacent inverters 5. This applies to any example disclosed herein.

The drive system 1-1 may comprise a plurality of sensors (not shown) each configured to measure a drive system parameter such as a DC bus current, a DC bus voltage, light inside a cabinet 9, or pressure inside a cabinet 9.

According to one example, each sensor is configured to measure a drive system parameter associated with one or more adjacently arranged inverters 5. Each sensor may for example be arranged in a respective cabinet 9, measuring the drive system parameter inside the cabinet 9 in question.

Each sensor may be configured to provide measurements of the drive system parameter to the local control system of one or more inverters 5. The control system may be configured to control the arc suppressing device 11 assigned to the one or more inverters 5 to short-circuit the DC bus 3 in the event of an arcing fault on the DC bus 3 based on the drive system parameter.

The short-circuiting of the DC bus 3 will generally not be made entirely simultaneously by all the arc suppressing devices 11 because the arc suppressing device 11 that is controlled by a control system receiving measurements from a sensor closest to the arcing fault will control its arc suppressing device 11 first.

Fig. 1B shows an example of operation of the drive system 1-1 in the event of an arcing fault on the DC bus 3. According to the example, an arcing fault resulting in an electric arc 13 on the DC bus 3 occurs in a region of the DC bus 3 where the inverters 5a and 5b are connected to the DC bus 3.

The sensor that is configured to detect a drive system parameter in a region of the inverters 5a and 5b detects the presence of the electric arc 13 and provides measurements to the local control systems, which control a respective one of the arc suppressing devices 11-1 and 11-2 to be set in an on state. This causes short-circuiting of the DC bus 3 close to the electric arc 13 and commutation of the current from the electric arc 13. The rest of the arc suppressors 11 are shortly after also set in their on states, as a result of the corresponding sensors detecting the presence of the electric arc 13.

Fig. 2 shows another example of a drive system. The drive system 1-2 is similar to the drive system 1-1 except that the distribution of the arc suppressing devices 11 on the DC bus 3 is different. In the example shown in Fig. 2, each arc suppressing device 11 is assigned to six inverters 5, i.e., K=6.

In the example in Fig. 2, an arcing fault leading to an electric arc 13 occurs on the DC bus 3 on a section of the DC bus 3 to which the inverters 5a and 5b are connected. A sensor configured to detect a drive system parameter locally with respect to the inverters 5a and 5b sends measurements to the local control system configured to control the inverter 5a and 5b. Based on the measurements, the control system controls the arc suppressing device 11-3 assigned to the inverters 5a and 5b to be set in an on state such that the DC bus 3 is short circuited close to the electric arc 13. The other arc suppressing devices 11 of the drive system 1-2 are a short period later set in their open state too.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A drive system (1-1; 1-2) comprising:
a DC bus (3),
a plurality of power electronics devices (5), each comprising a capacitor, each power electronics device (5) being connected to the DC bus (3) in parallel with the other power electronics devices (5), the drive system is **characterised in that** it further comprises
a plurality of arc suppressing devices (11, 11-1, 11-2, 11-3), each being configured to short circuit the DC bus (3) in case of an arcing fault on the DC bus (3).

2. The drive system (1-1; 1-2) as claimed in claim 1, wherein each arc suppressing device (11, 11-1, 11-2, 11-3) is assigned to at least one power electronics device (5).

3. The drive system (1-1; 1-2) as claimed in claim 1 or 2, wherein each arc supressing device (11, 11-1, 11-2, 11-3) is assigned to at least three power electronics devices (5) of the plurality of power electronics devices (5), such as at least six, power electronics devices (5).

4. The drive system (1-1; 1-2) as claimed in any of the preceding claims, wherein the power electronics devices (5) are consecutively connected to the DC bus (3).

5. The drive system (1-1; 1-2) as claimed in any of the preceding claims, comprising a plurality of cabinets (9), wherein each cabinet (9) comprises at least one power electronics device (5), preferably a plurality of power electronics devices (5) arranged physically adjacent to each other.

6. The drive system (1-1; 1-2) as claimed in any of the preceding claims, wherein each arc supressing device (11, 11-1, 11-2, 11-3) comprises a semiconducting switch.

7. The drive system (1-1; 1-2) as claimed in claim 6, wherein the semiconducting switch is a thyristor or a transistor.

8. The drive system (1-1; 1-2) as claimed in any of the preceding claims, wherein a total number of power electronics devices (5) amount to at least 10, such as at least 15, such as at least 20.

9. The drive system (1-1; 1-2) as claimed in any of the preceding claims, wherein the arc suppressing devices (11, 11-1, 11-2, 11-3) are configured to short circuit the DC bus (3) based on a DC bus current, a DC bus voltage, light, or pressure.

10. The drive system (1-1; 1-2) as claimed in any of the preceding claims, wherein each power electronics device (5) comprises one of an inverter, a DC/DC chopper, and a braker chopper.

11. The drive system (1-1; 1-2) as claimed in any of the preceding claims, comprising a plurality of motors, wherein at least some of the power electronics devices (5) are connected to a respective motor of the plurality of motors.

12. The drive system (1-1; 1-2) as claimed in any of the preceding claims, wherein all the arc suppressing devices (11, 11-1, 11-2, 11-3) are configured to short circuit the DC bus (3) essentially simultaneously in case of an arcing fault on the DC bus (3).

## Patentansprüche

1. Antriebssystem (1-1; 1-2), das Folgendes umfasst:
einen Gleichstrombus (3),
mehrere Leistungselektronikvorrichtungen (5), die jeweils einen Kondensator umfassen, wobei jede Leistungselektronikvorrichtung (5) parallel zu den anderen Leistungselektronikvorrichtungen (5) mit dem Gleichstrombus (3) verbunden ist, wobei das Antriebssystem **dadurch gekennzeichnet ist, dass** es ferner Folgendes umfasst:
mehrere Lichtbogenunterdrückungsvorrichtungen (11, 11-1, 11-2, 11-3), die jeweils konfiguriert sind, den Gleichstrombus (3) im Fall eines Störlichtbogens auf dem Gleichstrombus (3) kurzzuschließen.

2. Antriebssystem (1-1; 1-2) nach Anspruch 1, wobei jede Lichtbogenunterdrückungsvorrichtung (11, 11-1, 11-2, 11-3) mindestens einer Leistungselektronikvorrichtung (5) zugeordnet ist.

3. Antriebssystem (1-1; 1-2) nach Anspruch 1 oder 2, wobei jede Lichtbogenunterdrückungsvorrichtung (11, 11-1, 11-2, 11-3) mindestens drei Leistungselektronikvorrichtungen (5) der mehreren Leistungselektronikvorrichtungen (5), wie etwa mindestens sechs Leistungselektronikvorrichtungen (5), zugeordnet ist.

4. Antriebssystem (1-1; 1-2) nach einem der vorhergehenden Ansprüche, wobei die Leistungselektronikvorrichtungen (5) nacheinander mit dem Gleichstrombus (3) verbunden sind.

5. Antriebssystem (1-1; 1-2) nach einem der vorhergehenden Ansprüche, das mehrere Schränke (9) umfasst, wobei jeder Schrank (9) mindestens eine Leistungselektronikvorrichtung (5), vorzugsweise mehrere Leistungselektronikvorrichtungen (5), die physisch zueinander benachbart angeordnet sind, enthält.

6. Antriebssystem (1-1; 1-2) nach einem der vorhergehenden Ansprüche, wobei jede Lichtbogenunterdrückungsvorrichtung (11, 11-1, 11-2, 11-3) einen Halbleiterschalter umfasst.

7. Antriebssystem (1-1; 1-2) nach Anspruch 6, wobei der Halbleiterschalter ein Thyristor oder ein Transistor ist.

8. Antriebssystem (1-1; 1-2) nach einem der vorhergehenden Ansprüche, wobei eine Gesamtzahl von Leistungselektronikvorrichtungen (5) mindestens 10, wie etwa mindestens 15, wie etwa mindestens 20, beträgt.

9. Antriebssystem (1-1; 1-2) nach einem der vorhergehenden Ansprüche, wobei die Lichtbogenunterdrückungsvorrichtungen (11, 11-1, 11-2, 11-3) konfiguriert sind, den Gleichstrombus (3) basierend auf einem Gleichstrombusstrom, einer Gleichstrombusspannung, Licht oder Druck kurzzuschließen.

10. Antriebssystem (1-1; 1-2) nach einem der vorhergehenden Ansprüche, wobei jede Leistungselektronikvorrichtung (5) einen Wechselrichter, einen Gleichstrom/Gleichstrom-Zerhacker oder einen Unterbrecher-Zerhacker umfasst.

11. Antriebssystem (1-1; 1-2) nach einem der vorhergehenden Ansprüche, das mehrere Motoren umfasst, wobei mindestens einige der Leistungselektronikvorrichtungen (5) mit einem jeweiligen Motor der mehreren Motoren verbunden sind.

12. Antriebssystem (1-1; 1-2) nach einem der vorhergehenden Ansprüche, wobei alle Lichtbogenunterdrückungsvorrichtungen (11, 11-1, 11-2, 11-3) konfiguriert sind, den Gleichstrombus (3) im Fall eines Störlichtbogens auf dem Gleichstrombus (3) im Wesentlichen gleichzeitig kurzzuschließen.

## Revendications

1. Système d'entraînement (1-1 ; 1-2), comprenant :
un bus CC (3),
une pluralité de dispositifs d'électronique de puissance (5), comprenant chacun un condensateur, chaque dispositif d'électronique de puissance (5) étant connecté au bus CC (3) en parallèle avec les autres dispositifs d'électronique de puissance (5), le système d'entraînement est **caractérisé en ce qu'**il comprend en outre
une pluralité de dispositifs de suppression d'arc (11, 11-1, 11-2, 11-3), chacun étant configuré pour court-circuiter le bus CC (3) en cas de défaut d'arc sur le bus CC (3).

2. Système d'entraînement (1-1 ; 1-2) selon la revendication 1, dans lequel chaque dispositif de suppression d'arc (11, 11-1, 11-2, 11-3) est attribué à au moins un dispositif d'électronique de puissance (5).

3. Système d'entraînement (1-1 ; 1-2) selon la revendication 1 ou 2, dans lequel chaque dispositif de suppression d'arc (11, 11-1, 11-2, 11-3) est attribué à au moins trois dispositifs d'électronique de puissance (5) de la pluralité de dispositifs d'électronique de puissance (5), tels qu'au moins six dispositifs d'électronique de puissance (5).

4. Système d'entraînement (1-1 ; 1-2) selon l'une quelconque des revendications précédentes, dans lequel les dispositifs d'électronique de puissance (5) sont connectés consécutivement au bus CC (3).

5. Système d'entraînement (1-1 ; 1-2) selon l'une quelconque des revendications précédentes, comprenant une pluralité d'armoires (9), chaque armoire (9) comprenant au moins un dispositif d'électronique de puissance (5), de préférence une pluralité de dispositifs d'électronique de puissance (5) agencés physiquement de manière adjacente les uns aux autres.

6. Système d'entraînement (1-1 ; 1-2) selon l'une quelconque des revendications précédentes, dans lequel chaque dispositif de suppression d'arc (11, 11-1, 11-2, 11-3) comprend un commutateur à semi-conducteur.

7. Système de commande (1-1; 1-2) selon la revendication 6, dans lequel le commutateur à semi-conducteur est un thyristor ou un transistor.

8. Système d'entraînement (1-1 ; 1-2) selon l'une quelconque des revendications précédentes, dans lequel un nombre total de dispositifs d'électronique de puissance (5) s'élève à au moins 10, tel qu'au moins 15, tel qu'au moins 20.

9. Système d'entraînement (1-1 ; 1-2) selon l'une quelconque des revendications précédentes, dans lequel les dispositifs de suppression d'arc (11, 11-1, 11-2, 11-3) sont configurés pour court-circuiter le bus CC (3) sur la base d'un courant de bus CC, d'une tension de bus CC, d'une lumière ou d'une pression.

10. Système d'entrainement (1-1 ; 1-2) selon l'une quelconque des revendications précédentes, dans lequel chaque dispositif d'électronique de puissance (5) comprend l'un parmi un onduleur, un hacheur CC/CC et un hacheur de freinage.

11. Système d'entraînement (1-1 ; 1-2) selon l'une quelconque des revendications précédentes, comprenant une pluralité de moteurs, au moins certains des dispositifs d'électronique de puissance (5) étant connectés à un moteur respectif de la pluralité de moteurs.

12. Système d'entraînement (1-1 ; 1-2) selon l'une quelconque des revendications précédentes, dans lequel tous les dispositifs de suppression d'arc (11, 11-1, 11-2, 11-3) sont configurés pour court-circuiter le bus CC (3) essentiellement simultanément en cas de défaut d'arc sur le bus CC (3).
